# EUROPEAN PATENT SPECIFICATION

(11) **EP 0 579 039 B1**
(45) Date of publication and mention of the grant of the patent: **25.04.2001**
(21) Application number: 93110453.3
(22) Date of filing: 30.06.1993
(51) Int. Cl.: H04L 7/08, H04L 7/04

(54) **Synchronous detecting apparatus and synchronous detecting and protecting method**
Synchron-Detektoreinrichtung und Synchron-Detektions- und Schutzverfahren
Dispositif de détection synchrone et procédé de détection et protection synchrone

(30) Priority: 30.06.1992 JP 19634592
(43) Date of publication of application: 19.01.1994
(73) Proprietor: SONY CORPORATION, Tokyo (JP)
(72) Inventor: Minematsu, Toru, c/o Sony Corporation, Shinagawa-ku, Tokyo (JP); Sasaki, Kazuji, c/o Sony Corporation, Shinagawa-ku, Tokyo (JP)
(74) Representative: Körber, Wolfhart, Dr.rer.nat.

(56) References cited:
- EP-A- 0 158 302
- EP-A- 0 255 840
- DE-A- 3 616 556
- DE-A- 3 722 567

## Description

### TECHNICAL FIELD :

This invention relates to a synchronous detecting apparatus and a synchronous detecting and protecting method.

### BACKGROUND OF THE INVENTION:

Conventionally, synchronous detection is accomplished by comparing each received signal comprising all bits of a synchronizing word with a predetermined synchronized word bit pattern. According to this method, synchronous detection becomes unpredictable and often untenable if the frequency of errors is so high that one error can be detected at intervals of the bits constituting each synchronizing word. If the number of bits of each synchronizing word is reduced, synchronism may be detected and maintained despite high error frequencies. In the latter case, however, the same bit string as that of the synchronizing word is more likely to appear in the data stream. This can lead to erroneous synchronism which is corrected only after a lot of time is spent on corrective measures.

From DE 3616556 A1 a synchronous detecting apparatus for detecting a synchronous signal transmitted in time frames of a digital signal is known having a synchronizing signal detecting means for detecting a received synchronizing signal and a synchronism establishment detecting means for detecting establishment of synchronism or asynchronism and enabling and disabling the receiving operation of the digital signal accordingly.

From the EP-A-0 158 302 a receiver for a digital input signal comprising information signals and frame synchronization signals is known, wherein frame synchronization is established by a frame synchronization pulse generator with reference to both the information signals and the frame synchronization signals. A discriminator discriminates between the information signals and other spurious signals by monitoring descrambled digital signals produced by a descrambler in response to the information signals or by monitoring reproduced analog signals into which the descrambled digital signals are converted. With the receiver the frame synchronization can quickly be established when the receivers are put in the asynchronous state and once the frame synchronization is established, the receiver is not radically turned back to the asynchronous state even when the frame synchronous signals are not detected in the synchronization pulse detector, since the information signals can also be used for preserving the synchronous state.

From the EP-A-255840 a circuit for detecting synchronism in a digital broadcast receiver is known, in which a received and demodulated synchronous word is rearranged in an specific way before judging whether or not the received signal is the synchronous word. So even if a bit error in the received synchronous word occurs, it is possible to obtain the synchronizing signal with high probability.

### SUMMARY OF THE INVENTION:

It is therefore an object of the present invention to overcome the above and other deficiencies and disadvantages of the prior art and to provide a synchronous detecting apparatus and a synchronous detecting and protecting method for improving the prior art.

According to the present invention, there is provided a synchronous detecting apparatus as defined in claim 1 and a synchronous detecting and protecting method as defined in claim 5.

An embodiment of the invention may comprise a synchronous detecting apparatus for detecting a synchronizing signal transmitted at intervals of predetermined data units. The synchronizing signal includes a first synchronizing signal made of a first signal pattern and a second synchronizing signal composed of a second signal pattern, part of the second signal pattern being common to the first signal pattern. The synchronous detecting apparatus comprises a synchronizing signal detecting circuit, a synchronism establishment detecting circuit and a control gate. The synchronizing signal detecting circuit includes: a common gate for detecting the part common to the first signal pattern and to the second signal pattern; a first pattern detecting gate for detecting that part of the first signal pattern which differs from the second signal pattern; and a second pattern detecting gate for detecting that part of the second signal pattern which differs from the first signal pattern. The synchronism establishment detecting circuit detects the establishment of synchronism based on the synchronizing signal detected by the synchronizing signal detecting circuit and outputs a synchronism establishment detecting signal accordingly. The control gate excludes from the object of synchronous detection the output signal of the common gate in accordance with the synchronism establishment detecting signal.

The synchronous detecting apparatus according to the invention reduces the number of the bits to be detected for synchronous detection after the establishment of synchronism has been detected. The arrangement makes it possible to maintain correct synchronism even if the frequency of errors is increased.

According to the synchronous detecting and protecting method of the invention, faulty synchronism is prevented by detecting the synchronizing signal using all bits thereof before synchronism is established. Once synchronism is established, only part of the bits of the synchronizing signal are used for synchronism verification. The scheme makes it possible to establish synchronism if the frequency of errors is so high that one error is detected at intervals of the bits constituting each synchronizing word. Thereafter, synchronism may be maintained even if the error frequency becomes even higher.

These and other objects, features and advantages of the invention will become more apparent upon a reading of the following description and appended drawings.

### BRIEF DESCRIPTION OF THE DRAWINGS:

The invention will now be described by way of example with reference to the accompanying drawings, throughout which like parts are referred to by like references, and in which:
Fig. 1 is a view showing the basic structure of an A frame and a B frame for digital satellite radio (DSR);
Fig. 2 is a view depicting the structure of a 77-bit block for DSR;
Fig. 3 is a view illustrating the structure of a special service frame, a special service superframe and a special service super-superframe for DSR;
Fig. 4 is a block diagram of a DSR receiver;
Fig. 5 is a block diagram of the decoder 3 included in Fig. 4;
Fig. 6 is a block diagram of a synchronous detecting circuit according to the invention;
Fig. 7 is a flowchart showing part of the steps constituting a synchronous detecting and protecting method according to the invention; and
Fig. 8 is a flowchart showing the rest of the steps constituting the synchronous detecting and protecting method according to the invention.

### BEST MODES OF CARRYING OUT THE INVENTION:

Described below is how the present invention is applied illustratively to receivers of the digital satellite radio (DSR) now practiced in Germany. The DSR is a satellite-based digital audio broadcasting system. The system involves sampling audio signals at 32 kHz for quantization in 16 bits and further compressing the sampled data from 16 to 14 bits by allocating scale factors at intervals of 64 samples. The resulting audio data are multiplexed over 16 stereophonic channels (or 32 monophonic channels) that are placed in two bit strings of 10.24 Mbps each. The bit strings are subjected to QPSK modulation and carried on a single radio wave.

The data to be transmitted include 14-bit audio data, scale factor data, program information and program-related information. The data are framed at 32 kHz. Each frame has 32 audio data on each channel. 16-bit scale factor data are allocated to each frame so that the scale factor of each channel is available for each special service frame composed of 64 frames. The remaining bits of the scale factor data are allocated to the program-related information. The program information is allocated one bit per frame so that each special service superframe composed of eight special service frames (made of 512 frames) will include data about the program category and stereophonic/monophonic identification regarding all channels.

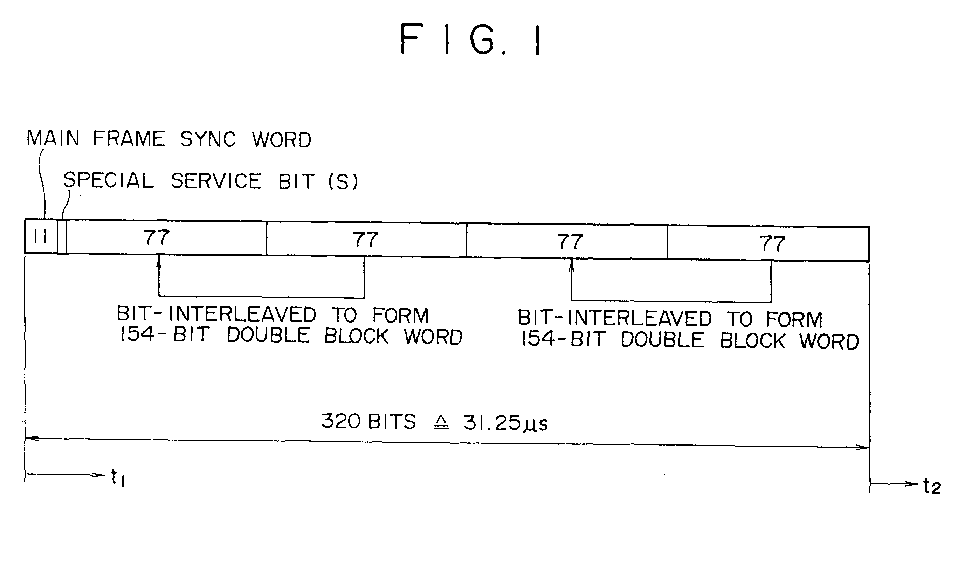

There are two kinds of frames: A frame and B frame which are identical in basic structure. Each of the A and B frames is composed of 320 bits, i.e., four 77-bit blocks, a 11-bit Barker code which is a main frame synchronizing word and a 1-bit special service bit. The special service bit is provided in the A frame only; the corresponding position in the B frame is fixed to "0". The B frame is an inverted Barker code. The basic structure of the A and B frames is as shown in Fig. 1: the 11-bit Barker code is followed by the 1-bit special service bit which is in turn followed by two double block words of 154 bits each, each double block word being composed of two 77-bit blocks that are bit-interleaved. The frame structure thus amounts to 320 bits.

For transmission, each of the A and B frames excluding the 12 bits made of the Barker code and of the special service bit is subjected to scrambling, differential encoding and QPSK modulation, in that order.

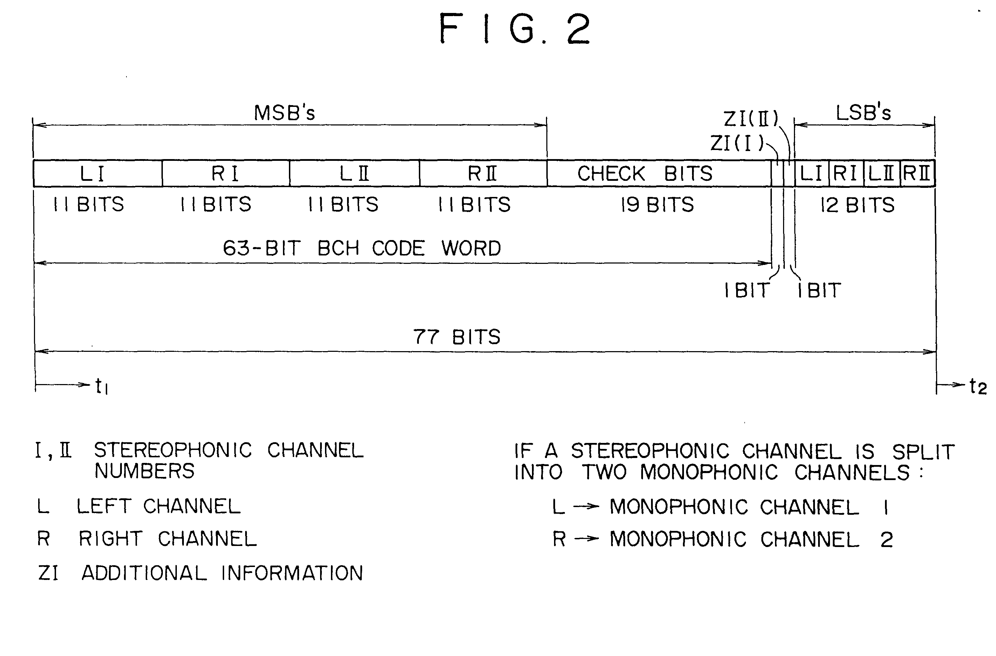

The 77-bit block is constructed as shown in Fig. 2. One 77-bit block has a pair of stereophonic channel numbers 1 and 2, another 77-bit block has another pair of stereophonic channel numbers 3 and 4, and so on. The 77-bit block having the channel numbers 1 and 2 will now be described by way of example. Arranged first are high-order 11 bits out of the 14 bits constituting the left audio data for channel 1. The first 11 bits are followed by high-order 11 bits out of the 14 bits constituting the right audio data for channel 1, high-order 11 bits out of the 14 bits constituting the left audio data for channel 2, and high-order 11 bits out of the 14 bits constituting the right audio data for channel 2, in that order. These 44 bits are turned into a BCH (63, 44) code followed by 19 additional check bits. The 19 check bits are in turn followed by an additional information bit (the bit representing the above-mentioned scale factor or program-related information) of channel 1 and another information bit of channel 2. The two information bits are followed by low-order 3 bits of the left audio data for channel 1, low-order 3 bits of the right audio data for channel 1, low-order 3 bits of the left audio data for channel 2 and low-order 3 bits of the right audio data for channel 2, in that order. The bit block structure thus amounts to 77 bits. The additional information bits and the low-order bits are not coded for error correction.

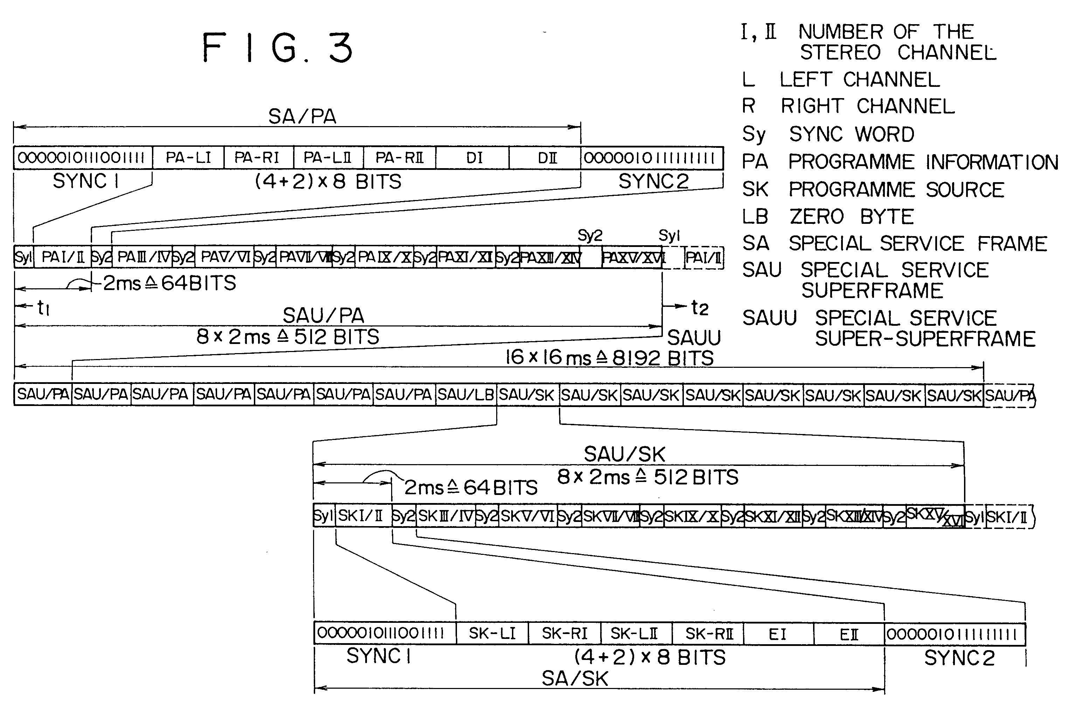

The special service bits S of 64 frames (64 bits) are combined to form a special service frame SA, and 8 special service frames SA constitute a special service superframe SAU. The special service superframes SAU come in three types: a program information special service superframe, a program source special service superframe, and a zero byte superframe (formed from special service frames made of 0 bits except for the Williard code). Seven program information special service superframes, one zero byte superframe and 8 program source special service superframes are combined to form a special service super-superframe SAUU. These relationships are illustrated in Fig. 3.

One special service frame SA comprises 6 bytes (48 bits) of data for 2 stereophonic channels: a 16-bit Williard code, 2 program information/program source bytes for each stereophonic channel (1 byte for each monophonic channel), and one mode information byte for each stereophonic channel. Because all 16 stereophonic channels are multiplexed, 8 special service frames are enough to transmit information on all channels; the 8 special service frames constitute a special service superframe SAU. The information is furnished in pairs of stereophonic channel numbers: 1 and 2, 3 and 4, ..., 15 and 16. The special service frames except for the one including the information for stereophonic channel numbers 1 and 2 have a Williard code SYNC1 with its bits 11 and 12 set to "1". The arrangement identifies where a special service superframe commences. Special service super-superframes SAUU are delimited by the presence of a zero byte superframe.

As described, one frame provides one additional information bit for each stereophonic channel; the additional information bits are handled in units of 64 frames (64 bits). The additional information bit frames are in synchronism with the above-mentioned special service frames. That is, the first bit of an additional information bit frame is the same as the additional information bit of the frame next to the frame containing the last bit of the Williard code of a special service frame. The additional information bit frame contains 22 program-related information bits as well as 42 BCH-coded scale factor bits. Specifically, the 42 bits are made of 3 scale factor bits for the left channel and 3 scale factor bits for the right channel, the scale factor bits being turned into a (14, 6) BCH code for 3 reiterations. One additional information bit frame is provided for each stereophonic channel every 64 frames, i.e., 16 kinds of additional information bit frames are provided.

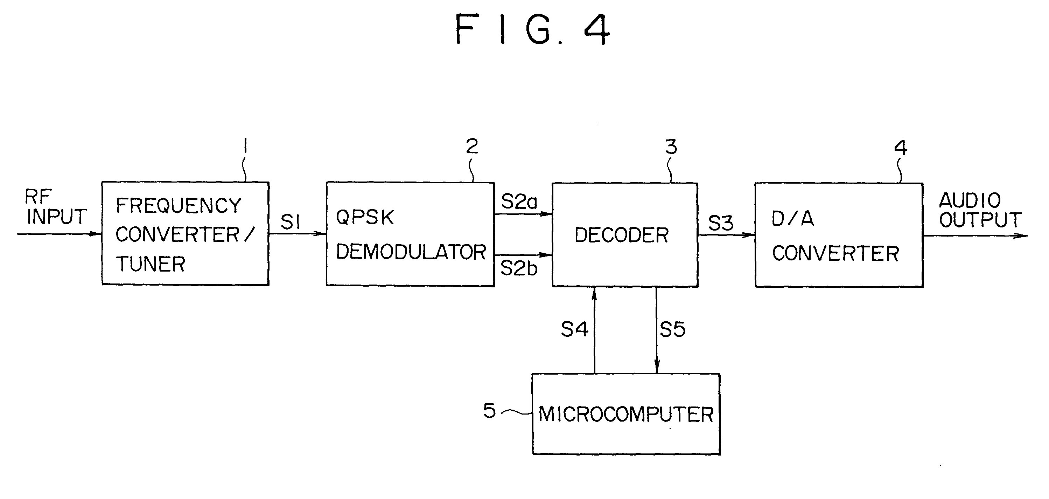

After the general description above of the DSR data frame structure, the DSR receiver will now be described with reference to Fig. 4. The DSR receiver comprises a frequency converter/tuner 1, a QPSK demodulator 2, a decoder 3, a D/A converter 4 and a microcomputer 5. In operation, the DSR receiver first receives an RF input from the antenna or from the CATV line. The frequency converter/tuner 1 selects the necessary frequency from the RF input and converts it to the frequency of an input signal S1 destined to the QPSK demodulator 2. The QPSK demodulator 2 demodulates the input signal S1 into two 10 Mbps digital signals S2a and S2b composed of an in-phase component and an orthogonal component, respectively. On receiving the two digital signals S2a and S2b, the decoder 3 processes the signals to output a necessary timing signal and audio data S3 to the D/A converter 4. At the same time, the decoder 3 supplies the microcomputer 5 with a signal S5 representing program information, program-related information PI and others. In turn, the microcomputer 5 sends to the decoder 3 a signal S4 for channel selection and stereophonic/monophonic switching. The decoder 3 selects and processes the necessary data based on the signal S4.

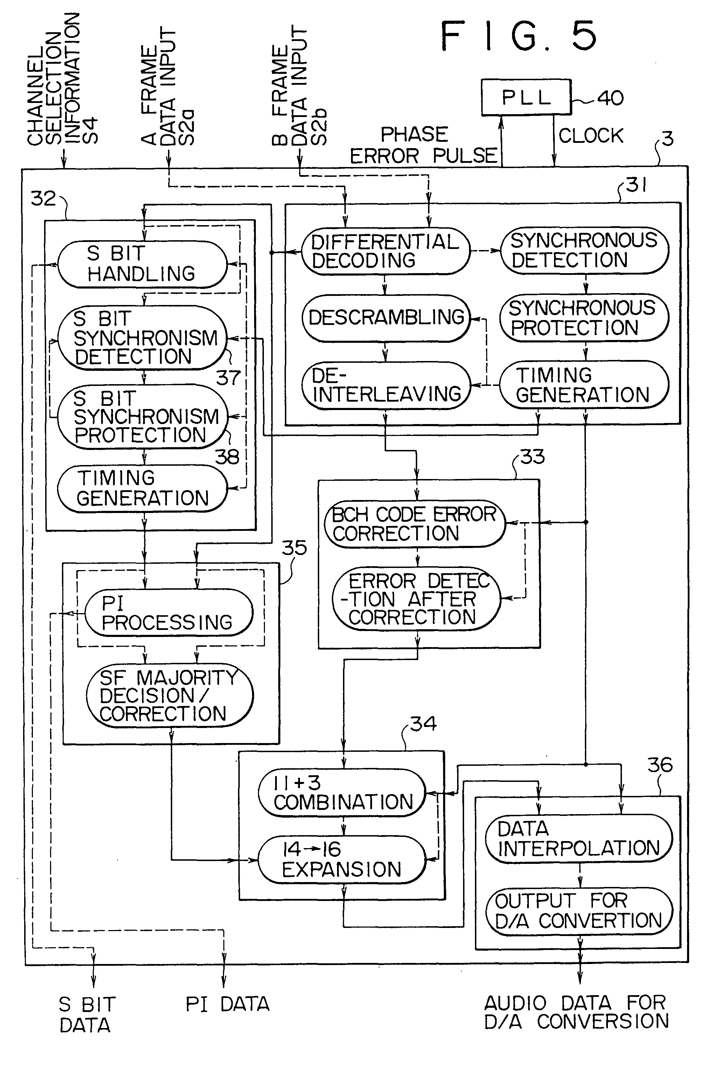

Fig. 5 shows how the decoder 3 is constructed. The decoder 3 receives the two digital signals S2a and S2b as an A frame data input and a B frame data input, respectively. The inputs are subjected to differential decoding of a block 31 to detect the Barker code for establishment and protection of frame synchronism. At this stage, the special service bit (S bit) immediately after the Barker code of the A frame is subtracted and sent to a block 32. The block 31 performs other functions as well: descrambling scrambled data, de-interleaving interleaved data, carrying out part of the operation of selecting the 77-bit block including the selected channels, and generating various timing pulses needed by other blocks.

The block 31 sends the selected 77-bit block to a block 33. The block 33 performs (63, 44) BCH code error correction and detection on the 77-bit block, and sends the result to a block 34. The block 34 combines the error-corrected high-order 11 bits and low-order 3 bits to reconstitute 14-bit data and, using the scale factor obtained from a block 35, restores the 16-bit data. The 16-bit data are sent to a block 36. Using the error information from the block 33, the block 36 performs linear interpolation on any error data and outputs the result to the D/A converter 4 of Fig. 4.

Upon receipt of the special service bit from the block 31, the block 32 detects the Williard code, i.e., the synchronizing signal for establishing and protecting synchronism between special service frames and special service superframes. The block 32 then changes the timing signal for easier interface with the microcomputer 5 and outputs the changed signal. Using the information on the special service frame synchronism established by the block 32, the block 35 processes the additional information bits for the selected channels received from the block 31. The block 35 makes a majority decision on the 3 reiterations of the scale factors, performs (14, 6) BCH code error correction, and sends the result to the block 34. This allows the program-related information PI to be output together with necessary timing signals.

The DSR involves a plurality of frames that must all be synchronized correctly for error-free reception. The synchronism of A and B frames may be established by use of the correlation therebetween even where the bit error rate is worse than 1/11. By contrast, the special service frames are synchronized using the 16-bit Williard code that cannot be detected if the bit error rate drops below 1/16. This means that the allowable bit error rates permitting correct reception are limited to the extent to which the synchronism of special service frames may be established. The range of allowable bit error rates for special service frame synchronism is thus different from that which allows the A and B frames to be synchronized. It follows that improving the range of bit error rates for permitting special service frame synchronism translates into expanding the range of allowable bit error rates for correct reception.

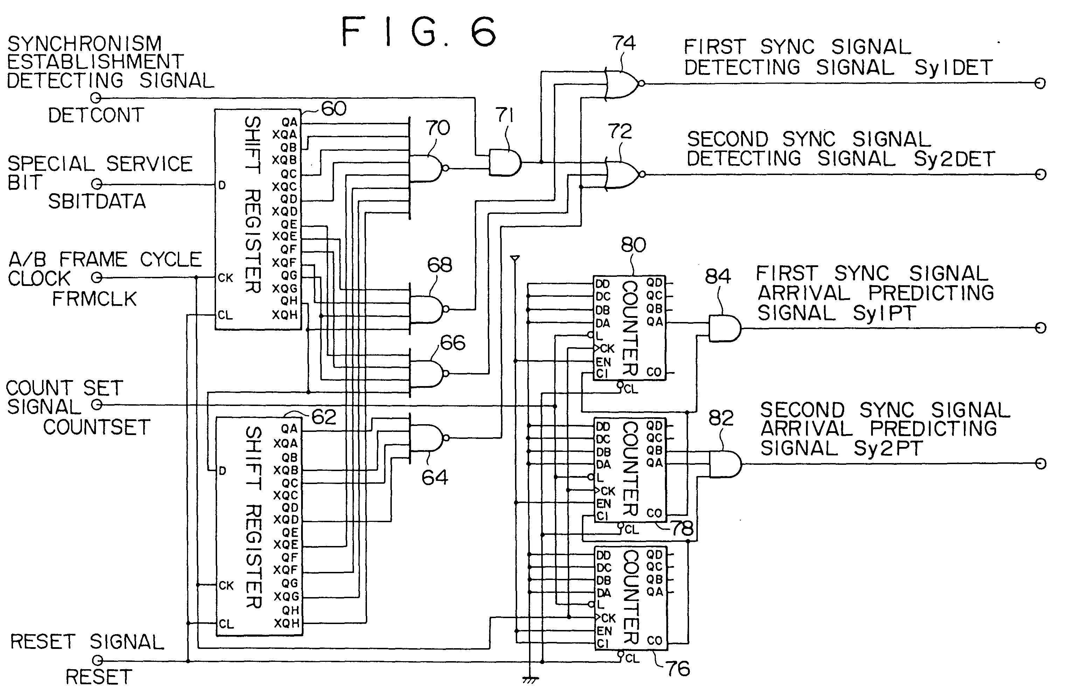

The embodiments to be described below with reference to Figs. 6, 7 and 8 are designed to improve the range of allowable bit error rates for establishing the synchronism of special service frames. The special service frames SA are subframes whose timing is maintained unless the A and B frames, which are main frames, become out of synchronism. Once the special service frames SA are synchronized correctly, the synchronism thereof may be protected by simply checking to see if the Williard code arrives where required at intervals of special service frames; measures to detect the Williard code need not be too strict. Thus from the state of asynchronism until synchronism is established, all 16 bits are checked for Willard code detection. Once synchronism is established, part of the bits of the Willard code are ignored upon detection. In this manner, the Willard code is detected even where the bit error rate is worsened appreciably.

Fig. 6 shows a Willard code detecting circuit (S bit synchronism detecting part 37 of block 32 in Fig. 5) as an example of the synchronous detecting apparatus embodying the invention. The differential decoding part of the block 31 in Fig. 5 sends a special service bit SBITDATA to a 16-bit shift register made of two 8-bit shift registers 60 and 62 serially connected. The shift register is supplied with a clock signal of the A/B frame cycle from the timing generating part of the block 31. The output of the shift register is decoded through gates for Williard code detection.

A NAND gate 64 receives outputs QA, XQB, QC and XQD of the shift register 62 to detect bits 5 through 8. A NAND gate 70 receives outputs XQH, XQG, XQF and XQE of the shift register 62 as well as outputs QD, QC, QB and QA of the shift register 60 to detect high-order 4 bits and low-order 4 bits.

NAND gates 66 and 68 both detect bits 9 through 12. It should be noted here that bits 11 and 12 of the first special service frame SA in a special service superframe SAU differ from bits 11 and 12 in the other special service frames SA therein. The bit arrangement is intended to help establish the synchronism of the special service superframes SAU. With this arrangement taken into account, the NAND gate 68 receives outputs QH, QG, XQF and XQE of the shift register 60 to detect the Williard code (SYNC1) of the first special service frame SA; the NAND gate 66 receives outputs QH, QG, QF and QE of the shift register 60 to detect the Williard code (SYNC2; not referred to as such in strict terms) of the other special service frames SA.

The output of the NAND gate 64 is fed to the input of NOR gates 72 and 74. The output of the NAND gate 66 is supplied to the input of the NOR gate 72. The output of the NAND gate 68 is sent to the input of the NOR gate 74. The output of the NAND gate 70 is forwarded to one of the two inputs of an AND gate 71. The other input of the AND gate 71 is fed with a synchronism establishment detecting signal (DETCONT signal) indicating the establishment of synchronism at the low level, the signal coming from an S bit synchronism protecting part 38. The output of the AND gate 71 is supplied to the inputs of NOR gates 72 and 74.

The NOR gates 72 and 74 each function as a negative logic AND gate that outputs a high-level signal if all input signals are Low. The NOR gate 74 outputs a Sy1DET signal that becomes a first synchronizing signal (SYNC1) at the high level. The NOR gate 72 outputs a Sy2DET signal that becomes a second synchronizing signal (SYNC2) at the high level.

Three serially connected counters 76, 78 and 80 constitute a 9-bit counter which is initialized by a count set signal COUNTSET from the S bit synchronism protecting part 38 and which counts the clock pulses of the A/B frame cycle fed to its clock inputs CK. An AND gate 84 receives a carry-out output CO of the counter 78 and an output QA of the counter 80 in order to output one pulse every 512 clock pulses of the A/B frame cycle as a first synchronizing signal arrival predicting signal Sy1PT. An AND gate 82 receives a carry-out output CO of the counter 76 and outputs QA and QB of the counter 78 in order to output one pulse every 64 clock pulses of the A/B frame cycle (i.e., 8 pulses for every 512 pulses counted) as a second synchronizing signal arrival predicting signal Sy2PT.

The DETCONT signal is a signal that changes the number of the bits to be counted in the Williard code. Bringing the input of the DETCONT signal Low causes the output of the NAND gate 70 to be ignored. That is, the 8 bits handled by the NAND gate 70 are omitted as the object of detection. The Williard code is then detected by use of the remaining 8 bits.

The first synchronizing signal (SYNC1) detecting signal Sy1DET, the second synchronizing signal (SYNC2) detecting signal Sy2DET, the first synchronizing signal arrival predicting signal Sy1PT and the second synchronizing signal arrival predicting signal Sy2PT, all detected by the S bit synchronism detecting part 37, are fed to the S bit synchronism protecting part 38. Using the signals supplied, the S bit synchronism protecting part 38 performs backward and forward protection and feeds the synchronism establishment detecting signal DETCONT and count set signal COUNTSET to the S bit synchronism detecting part 37.

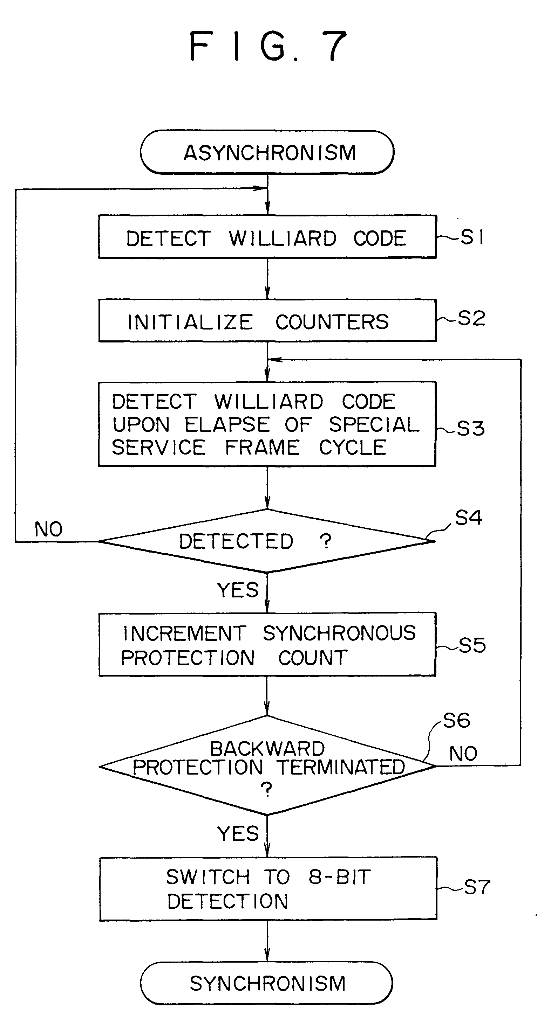

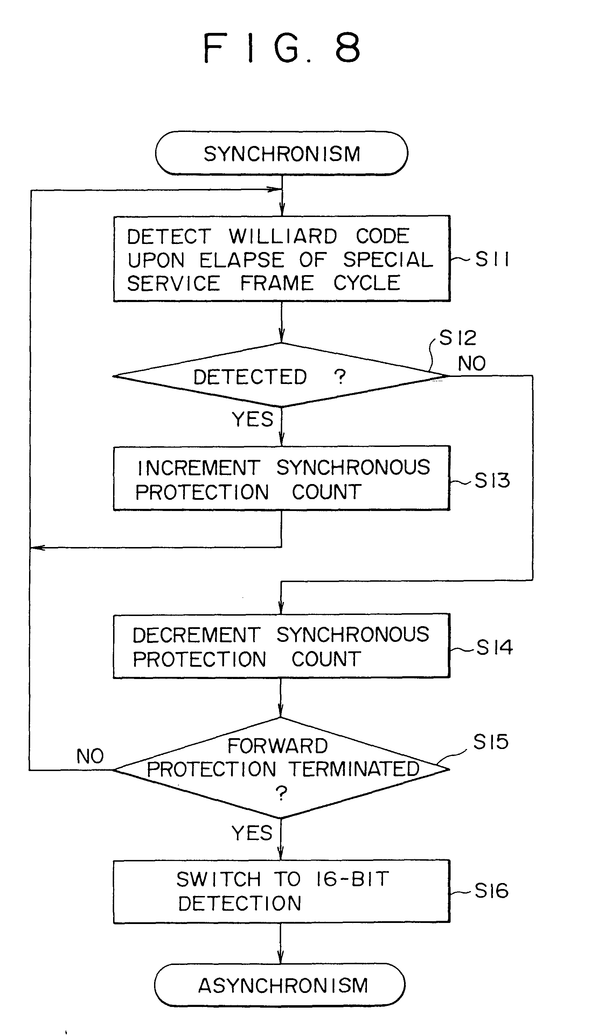

Figs. 7 and 8 outline the steps constituting a typical synchronous detecting and protecting method on which the S bit synchronism detecting part 37 and S bit synchronism protecting part 38 operate and which embodies the invention. When the Williard code is first detected in an asynchronous state, the first synchronizing signal detecting signal Sy1DET is output (step S1). This causes the count set signal COUNTSET to initialize the counters 76, 78 and 80 (step S2). Upon elapse of a special service frame cycle, the second synchronizing signal arrival predicting signal Sy2PT is output (step S3). (If a special service superframe cycle has elapsed following initialization, both the first and the second synchronizing signal arrival predicting signals Sy1PT and Sy2PT are output concurrently.) If the first or the second synchronizing signal detecting signal Sy1DET or Sy2DET is not output (NO in step S4), a pseudo synchronizing code is assumed to have been detected, and the next first synchronizing signal detecting signal Sy1DET is awaited. If the first or the second synchronizing signal detecting signal Sy1DET or Sy2DET is output (YES in step S4), a synchronous protection count is incremented (step S5). Then a check is made to see if a predetermined backward protection count is reached. If backward protection is not terminated (NO in step S6), the next output of the first or second synchronizing signal arrival predicting signal Sy1PT or Sy2PT is awaited in the current state. If backward protection is terminated (YES in step S6), the DETCONT signal is brought Low. This causes the output pulses of the NAND gate 70 to be ignored and sets to 8 the number of the bits to be detected in the Williard code (step S7). Now the synchronous state is attained.

In the synchronous state, as before, the output of the first or the second synchronizing signal arrival predicting signal Sy1PT or Sy2PT is awaited (step S11). A check is made to see if the first or the second synchronizing signal detecting signal Sy1DET or Sy2DET is output (step S12). If the signal is output, the synchronous protection count is incremented (step S13; the count remains unchanged after reaching its highest value). Steps S11 through S13 are then repeated.

If the first or the second synchronizing signal predicting signal Sy1DET or Sy2DET is not output (NO in step S12), the synchronous protection count is decremented (step S14). A check is made to see a predetermined forward protection count is reached (step S15). If the count is not reached (NO in step S15), the output of the first or the second synchronizing signal arrival predicting signal Sy1PT or Sy2PT is awaited in the current state. If the forward protection count is reached (YES in step S15), the DETCONT signal is brought High. This enables the output pulses of the AND gate 70 so that all bits (16 bits) of the Williard code will be detected (step S16). Then the asynchronous state is entered again.

### EXPLOITATION IN INDUSTRY:

As described and according to the invention, the synchronous detecting apparatus of Fig. 6 and the synchronous detecting and protecting method of Fig. 7 see to it that all bits of the synchronizing word are utilized until synchronism is established. Once synchronism is established, only part of the bits constituting the synchronizing word are used for synchronism verification. The scheme makes it possible to maintain synchronism even if the frequency of errors is so high that one error is detected at intervals of the bits constituting each synchronizing word. Thereafter, synchronism may be maintained even if the error frequency becomes even higher. This feature, which enhances the probability of receiving correct data, is particularly suitable for use in digital music broadcasting. In the field of digital music broadcasting, the widest possible range of transmitted data is desired to be received even though the data may not be completely free of errors. Depending on their severity, some of the errors in the data may be suppressed by simple interpolation; the remaining errors may translate into noise which, however, is better than not hearing anything at all. In that sense, the invention is adapted effectively to improve the reception capability of receivers for digital music broadcasting.

In the embodiment of Fig. 6, the number of the bits to be detected in the synchronizing code for synchronous detection algorithm is changed by simply adding the AND gate 71 to the synchronous detecting circuit. This means that a simplified hardware construction can maintain synchronism where the error frequency is high. In addition, the embodiment of Fig. 6 further simplifies its hardware construction by having the common portion of two synchronizing signals detected by the same gate 70.

As many apparently different embodiments of this invention may be made without departing from the scope thereof, it is to be understood that the invention is not limited to the specific embodiments thereof except as defined in the appended claims.

## Claims

1. A synchronous detecting apparatus for detecting a synchronizing signal having a predetermined number of bits transmitted at intervals of predetermined data units with of a digital signal, comprising:
synchronizing signal detecting means (37) for detecting said synchronizing signal;
synchronism establishment detecting means (38) for detecting the establishment of synchronism based on said synchronizing signal detected by said synchronizing signal detecting means (37) and for outputting a synchronism establishment detecting signal accordingly;
characterized by
reducing means (71) for reducing the number of bits to be detected for said synchronism detecting means (37) to detect synchronism in accordance with said synchronism establishment detecting signal.

2. A synchronous detecting apparatus according to claim 1, wherein said reducing means (71) reduces the number of the bits to be detected from 16 to 8.

3. A synchronous detecting apparatus according to claim 1, wherein said synchronizing signal includes a first synchronizing signal made of a first synchronizing signal made of a first signal pattern and a second synchronizing signal composed of a second signal pattern, part of said second signal pattern being common to said first signal pattern;
wherein said synchronizing signal detecting means (37) comprises:
a common gate (70) for detecting the part common to said first signal pattern and to said second signal pattern;
a first pattern detecting gate (68) for detecting that part of said first signal pattern which differs from said second signal pattern; and
a second pattern detecting gate (66) for detecting that part of said second signal pattern which differs from said first signal pattern; and
wherein said reducing means (71) suppresses the output signal of said common gate (70) as the object of synchronous detection in accordance with said synchronism establishment detecting signal.

4. A synchronous detecting apparatus according to claim 1, further comprising:
synchronizing signal arrival predicting means (76, 78, 80, 82, 84) for predicting the arrival of a synchronizing signal and for outputting a synchronizing signal arrival predicting signal accordingly;
counting means (S5) for counting the number of times said synchronizing signal detecting means (37) has detected said synchronizing signal when said synchronizing signal arrival predicting signal is output; and
judging means (S6) for judging that synchronism is established when the output of said counting means has reached a predetermined value.

5. A synchronous detecting and protecting method for detecting a synchronizing signal of a digital signal and for providing synchronous protection, comprising the steps of:
predicting the arrival time of said synchronizing signal,
counting the number of times said synchronizing signal is detected when the arrival of said synchronizing signal is predicted in an all-bit synchronous detection mode using all bits of said synchronizing signal;
switching to a partial-bit synchronous detection mode using a part of the bits of said synchronizing signal after the number of times said synchronizing signal is detected has reached a predetermined count value;
counting the number of times said synchronizing signal is not detected when the arrival of said synchronizing signal is predicted during said partial-bit synchronous detection and
switching to said all-bit synchronous detection mode after the number of times said synchronizing signal is not detected has reached a predetermined count value.

## Patentansprüche

1. Synchronermittlungsgerät zum Ermitteln eines Synchronisationssignals, welches eine vorher-festgelegte Anzahl von Bits aufweist, die in Intervallen von vorher-festgelegten Dateneinheiten mit einem Digitalsignal übertragen werden, welches umfaßt:
eine Synchronisationssignal-Ermittlungseinrichtung (37) zum Ermitteln des Synchronisationssignals;
eine Synchronismuseinrichtungs-Ermittlungseinrichtung (38) zum Ermitteln der Einrichtung von Synchronismus auf der Basis des Synchronisationssignals, welches durch die Synchronisationssignal-Ermittlungseinrichtung (37) ermittelt wird, und zum entsprechenden Ausgeben eines Synchronismuseinrichtungs-Ermittlungssignals;
gekennzeichnet durch
eine Reduziereinrichtung (71), um die Anzahl der zu ermittelnden Bits für die Synchronismusermittlungseinrichtung (37) zu reduzieren, um Synchronismus gemäß dem Synchronismuseinrichtungs-Ermittlungssignal zu ermitteln.

2. Synchronermittlungsgerät nach Anspruch 1, wobei die Reduziereinrichtung (71) die Anzahl der zu ermittelnden Bits von 16 auf 8 reduziert.

3. Synchronermittlungsgerät nach Anspruch 1, wobei das Synchronisationssignal ein erstes Synchronisationssignal umfaßt, welches aus einem ersten Synchronisationssignal besteht, welches aus einem ersten Signalmuster besteht, und ein zweites Synchronisationssignal, welches aus einem zweiten Signalmuster besteht, wobei ein Teil des zweiten Signalmusters dem ersten Signalmuster gemeinsam ist;
wobei die Synchronisationssignal-Ermittlungseinrichtung (37) umfaßt:
ein gemeinsames Gate (70), um den Teil, der dem ersten Signalmuster und dem zweiten Signalmuster gemeinsam ist, zu ermitteln;
ein erstes Musterermittlungsgate (68), um den Teil des ersten Signalmusters zu ermitteln, der gegenüber dem zweiten Signalmuster verschieden ist; und
ein zweites Musterermittlungsgate (66), um den Teil des zweiten Signalmusters zu ermitteln, der gegenüber dem ersten Signalmuster verschieden ist; und
wobei die Reduziereinrichtung (71) das Ausgangssignal des gemeinsamen Gates (70) als Synchronermittlungsobjekt gemäß dem Synchronismuseinrichtungs-Ermittlungssignal unterdrückt.

4. Synchronisationsermittlungsgerät nach Anspruch 1, welches außerdem umfaßt:
eine Synchronisationssignal-Ankunftsvorhersageeinrichtung (76, 78, 80, 82, 84), um die Ankunft eines Synchronisationssignals vorherzusagen und entsprechend ein Synchronisationssignal-Ankunftvorhersagesignal auszugeben;
eine Zähleinrichtung (S5), um die Häufigkeit zu zählen, mit der die Synchronisationssignal-Ermittlungseinrichtung (37) das Synchronisationssignal ermittelt hat, wenn das Synchronisationssignal-Ankunftvorhersagesignals ausgegeben wird; und
eine Beurteilungseinrichtung (S6), um zu beurteilen, daß Synchronismus eingerichtet ist, wenn das Ausgangssignal der Zählereinrichtung einen vorher-festgelegten Wert erreicht hat.

5. Synchronermittlungs- und Schutzverfahren zum Ermitteln eines Synchronisationssignals eines Digitalsignals und zum Bereitstellen eines Synchronisationsschutzes, welches folgende Schritte umfaßt:
Vorhersage der Ankunftszeit des Synchronisationssignals,
Zählen der Häufigkeit, mit der das Synchronisationssignal ermittelt wird, wenn die Ankunft des Synchronisationssignals in einem All-Bit-Synchronisationsermittlungsmodus, bei dem alle Bits des Synchronisationssignals verwendet werden, vorhergesagt wird;
Umschalten auf einen Teil-Bit-Synchronermittlungsmodus, wobei ein Teil der Bits des Synchronisationssignals verwendet werden, nachdem die Häufigkeit, mit der das Synchronisationssignal ermittelt wurde, einen vorher-festgelegten Zählwert erreicht hat;
Zählen der Häufigkeit, mit der das Synchronisationssignal nicht ermittelt wird, wenn die Ankunft des Synchronisationssignals während der Teil-Bit-Synchronisationsermittlung vorhergesagt wird; und
Umschalten auf den All-Bit-Synchronermittlungsmodus, nachdem die Häufigkeit, mit der das Synchronisationssignal nicht ermittelt wurde, einen vorher-festgelegten Zählwert erreicht hat.

## Revendications

1. Appareil de détection synchrone pour détecter un signal de synchronisation comportant un nombre prédéterminé de bits transmis selon des intervalles d'unités de données prédéterminées avec un signal numérique, comprenant :
un moyen de détection de signal de synchronisation (37) pour détecter ledit signal de synchronisation ;
un moyen de détection d'établissement de synchronisme (38) pour détecter l'établissement de synchronisme sur la base dudit signal de synchronisation qui est détecté par ledit moyen de détection de signal de synchronisation (37) et pour émettre en sortie un signal de détection d'établissement de synchronisme en conséquence,
caractérisé par :
un moyen de réduction (71) pour réduire le nombre de bits à détecter pour ledit moyen de détection de signal de synchronisme (37) afin de détecter un synchronisme conformément audit signal de détection d'établissement de synchronisme.

2. Appareil de détection synchrone selon la revendication 1, dans lequel ledit moyen de réduction (71) réduit le nombre de bits à détecter de 16 à 8.

3. Appareil de détection synchrone selon la revendication 1, dans lequel :
ledit signal de synchronisation inclut un premier signal de synchronisation qui est constitué par un premier signal de synchronisation formé par un premier motif de signal et un second signal de synchronisation composé d'un second motif de signal, une partie dudit second motif de signal étant commune audit premier motif de signal,
dans lequel :
ledit moyen de détection de signal de synchronisation (37) comprend :
une porte commune (70) pour détecter la partie commune audit premier motif de signal et audit second motif de signal ;
une porte de détection de premier motif (68) pour détecter la partie dudit premier motif de signal qui diffère dudit second motif de signal ; et
une porte de détection de second motif (66) pour détecter la partie dudit second motif de signal qui diffère dudit premier motif de signal ; et
dans lequel :
ledit moyen de réduction (71) supprime le signal de sortie de ladite porte commune (70) en tant qu'objet de détection synchrone conformément audit signal de détection d'établissement de synchronisme.

4. Appareil de détection synchrone selon la revendication 1, comprenant en outre :
un moyen de prédiction d'arrivée de signal de synchronisation (76, 78, 80, 82, 84) pour prédire l'arrivée d'un signal de synchronisation et pour émettre en sortie un signal de prédiction d'arrivée de signal de synchronisation en conséquence ;
un moyen de comptage (S5) pour compter le nombre de fois où ledit moyen de détection de signal de synchronisation (37) a détecté ledit signal de synchronisation lorsque ledit signal de prédiction d'arrivée de signal de synchronisation est émis en sortie ; et
un moyen d'appréciation (S6) pour apprécier qu'un synchronisme est établi lorsque la sortie dudit moyen de comptage a atteint une valeur prédéterminée.

5. Procédé de détection et de protection synchrones pour détecter un signal de synchronisation d'un signal numérique et pour assurer une protection synchrone, comprenant les étapes de :
prédiction de l'instant d'arrivée dudit signal de synchronisation ;
comptage du nombre de fois où ledit signal de synchronisation est détecté lorsque l'arrivée dudit signal de synchronisation est prédite dans un mode détection synchrone tous bits qui utilise tous les bits du signal de synchronisation ;
commutation sur un mode détection synchrone à bits partiels qui utilise une partie des bits dudit signal de synchronisation après que le nombre de fois où ledit signal de synchronisation est détecté a atteint une valeur de comptage prédéterminée ;
comptage du nombre de fois où ledit signal de synchronisation n'est pas détecté lorsque l'arrivée dudit signal de synchronisation est prédite pendant ladite détection synchrone à bits partiels ; et
commutation sur ledit mode détection synchrone tous bits après que le nombre de fois où ledit signal de synchronisation n'est pas détecté a atteint une valeur de comptage prédéterminée.
